Europäisches Patentamt

European Patent Office

Office européen des brevets

(11) Veröffentlichungsnummer : **0 071 814**
**B1**

(12) EUROPÄISCHE PATENTSCHRIFT

(45) Veröffentlichungstag der Patentschrift :
02.05.84

(21) Anmeldenummer : 82106500.0

(22) Anmeldetag : 19.07.82

(51) Int. Cl.³ : **A 01 N 49/00**, A 01 N 43/90 //
(A01N43/90, 31/02,
27/00),(A01N49/00, 43/90,
31/02, 27/00)

(54) Insektenlockstoff.

(30) Priorität : 28.07.81 DE 3129584

(43) Veröffentlichungstag der Anmeldung :
16.02.83 Patentblatt 83/07

(45) Bekanntmachung des Hinweises auf die Patenterteilung : 02.05.84 Patentblatt 84/18

(84) Benannte Vertragsstaaten :
AT BE CH DE FR IT LI SE

(56) Entgegenhaltungen :
EP-A- 0 023 793
EP-A- 0 028 818

(73) Patentinhaber : CELAMERCK GmbH & Co. KG
Binger Strasse 173
D-6507 Ingelheim am Rhein (DE)

(72) Erfinder : Adlung, Karl Günther, Dr. Dipl.-Landwirt
Finther Weg 7
D-6501 Budenheim (DE)
Erfinder : Becker, Peter H., Dr.
Raiffeisenstrasse 3
D-6507 Ingelheim (DE)
Erfinder : Holtmann, Heinrich, Dr.
Kaiser-Karl-Strasse 15
D-6535 Gau-Algesheim (DE)
Erfinder : Kauth, Hans-Herbert, Dr.
Gehauweg 14
D-6507 Ingelheim (DE)
Erfinder : Mengel, Rudolf, Dr. Dipl.-Chem.
Schützenpfad 22
D-6507 Ingelheim (DE)

## Insektenlockstoff

Die Erfindung betrifft eine neue Substanzkombination mit überragender Lockwirkung auf den gestreiften Nutzholzborkenkäfer (Trypodendron lineatum).

Ein Pheromon des gestreiften Nutzholzborkenkäfers ist Lineatin (3,3,7-Trimethyl-2,9-dioxatricyclo [3.3.10] nonan). In der EP-A-23 793 wird beschrieben, daß die Lockwirkung des Lineatins durch Zusatz von Ethanol und gegebenenfalls α-Pinen verbessert werden könne.

Überraschenderweise wurde nun gefunden, daß die Lockwirkung des Lineatins weit stärker erhöht und eine größere Wirkungsdauer erzielt werden kann, wenn es in Kombination mit Methylbutenol (2-Methyl-3-buten-2-ol) und/oder Amitinol (E-2-Methyl-6-methylen-3,7-octadien-2-ol) und/oder Ipsdienol und gegebenenfalls α-Pinen und/oder Ethanol angewendet wird. Die Komponenten Methylbutenol, Amitinol und Ipsdienol können je für sich oder in beliebigen Zusammenstellungen mit Lineatin kombiniert werden.

Gegenstand der Erfindung ist daher eine Substanzkombination bestehend aus Lineatin, Methylbutenol und/oder Amitinol und/oder Ipsdienol und gegebenenfalls α-Pinen und/oder Ethanol sowie ihre Verwendung zur Anlockung des gestreiften Nutzholzborkenkäfers.

Das Gewichtsverhältnis Lineatin zu Amitinol bzw. Ipsdienol in den erfindungsgemäßen Kombinationen beträgt etwa 1 : 1 bis 1 : 20, das Verhältnis Lineatin/Methylbutenol liegt zwischen etwa 1 : 200 und 1 : 5 000. Falls die Mischung Ethanol enthält, liegt das Verhältnis Lineatin/Ethanol zwischen etwa 1 : 50 und 1 : 500. Der α-Pinen-Anteil liegt zwischen 0 und 20 Gewichtsprozent der Mischung.

Typische Kombinationen sind (in Gewichtsteilen) :

1) 1 Tl. Lineatin
   1 Tl. Amitinol

2) 1 Tl. Lineatin
   10 Tle. Ipsdienol

3) 1 Tl. Lineatin
   200 Tle. Methylbutenol

4) 1 Tl. Lineatin
   1 000 Tle. Methylbutenol

5) 1 Tl. Lineatin
   5 000 Tle. Methylbutenol

6) 1 Tl. Lineatin
   1 000 Tle. Methylbutenol
   50 Tle. α-Pinen

7) 1 Tl. Lineatin
   500 Tle. Methylbutenol
   100 Tle. α-Pinen

8) 1 Tl. Lineatin
   5 Tle. Amitinol
   2 000 Tle. Methylbutenol

9) 1 Tl. Lineatin
   10 Tle. Amitinol
   4 000 Tle. Methylbutenol
   200 Tle. α-Pinen

10) 1 Tl. Lineatin
    5 Tle. Amitinol
    2 000 Tle. Methylbutenol
    100 Tle. α-Pinen

11) 1 Tl. Lineatin
    20 Tle. Amitinol
    200 Tle. Methylbutenol
    20 Tle. α-Pinen

12) 1 Tl. Lineatin
    1 Tl. Amitinol
    1 000 Tle. Methylbutenol
    100 Tle. α-Pinen

13) 1 Tl. Lineatin
    5 Tle. Ipsdienol
    2 000 Tle. Methylbutenol

14) 1 Tl. Lineatin
    5 Tle. Ipsdienol
    5 Tle. Amitinol
    4 000 Tle. Methylbutenol
    100 Tle. α-Pinen

15) 1 Tl. Lineatin
    200 Tle. Methylbutenol
    100 Tle. Ethanol
    10 Tle. α-Pinen

16) 1 Tl. Lineatin
    5 Tle. Ipsdienol
    1 000 Tle. Methylbutenol
    200 Tle. Ethanol

Die erfindungsgemäße Lockstoffkombination wird in an sich bekannter Weise angewendet, z. B. entsprechend der DE-OS 28 32 248. Ferner kann die Lockstoffkombination in Pasten eingearbeitet und entsprechend der DE-OS 29 45 655 in Kunststoffbeutel verpackt eingesetzt werden. Die Kunststoffbeutel, vorzugsweise aus Polyethylen, haben im allgemeinen eine Wandstärke von 20 bis 200 μm und eine Oberfläche von etwa 80 bis 320 cm². Das Verhältnis der Komponenten in der Lockstoffkombination kann in weiten Grenzen variiert werden. Ein hoher Anteil an Methylbutenol ist im allgemeinen vorteilhaft.

Im folgenden werden einige konkrete Ausführungsformen der Erfindung beschrieben.

# 0 071 814

Beispiel 1

Dispenser

Ein 6 × 4 cm² großes, mehrere Millimeter dickes Stück Schwammtuch wird mit einer Mischung aus 2 mg Lineatin, 2 000 mg Methylbutenol und 100 mg α-Pinen getränkt.

Das Schwammtuch wird dann in Folie aus Hochdruckpolyethylen, Wandstärke ca. 50 μm, eingesiegelt, so daß ein rechteckiger Beutel mit einer Oberfläche von ca. 112 cm² entsteht.

Beutel dieser Art werden im Abstand von 25 m in Bakke-Rohrfallen angewendet. Jedoch können auch andere Fallen benutzt und andere Abstände gewählt werden.

Entsprechend der vorstehend angegebenen Mischung können auch die weiter oben angegebenen Mischungen verwendet werden. Die Menge Lineatin pro Dispenser beträgt dabei 0,5 bis 2 mg.

Beispiel 2

Dispenser mit Paste/Zusammensetzung :

In Beutel der in Beispiel 1 angegebenen Art wird eine Paste aus

```
    2 mg Lineatin
2 000 mg Methylbutenol
  100 mg α-Pinen
4 200 mg Lanogen 1 500ʳ (Polyethylenglykol)
3 120 mg Vaseline
  520 mg Aerosil 200ʳ (kolloidale Kieselsäure)
```

gefüllt.

Die Anwendung erfolgt wie in Beispiel angegeben.

Die Paste kann auch wie folgt zusammengesetzt werden :

```
  0,5 mg  Lineatin
    5  mg  Amitinol
  100  mg  α-Pinen
2 000  mg  Methylbutenol
5 000  mg  Lanogen 1500ʳ
3 750  mg  Vaseline
  540  mg  Aerosol 200ʳ
```

Diese Mischung wird in einen Kunststoffbeutel mit ca. 70 μm Wandstärke und 200 cm² Oberfläche gefüllt. Hiermit wird eine besonders gute Dauerwirkung erzielt und weitgehende Unabhängigkeit von Temperaturschwankungen.

Die Anwendung erfolgt wie in Beispiel 1 angegeben.

Die Überlegenheit der erfindungsgemäßen Kombinationen geht aus den folgenden Versuchsergebnissen hervor. Es wurden BAKKE-Rohrfallen benutzt, die in einem Abstand von 25 m in einem ca. 80jährigen Fichtenbestand aufgestellt waren. Der Versuchszeitraum betrug 16 Wochen. Als Standard diente die Mischung aus 2 mg Lineatin, 400 mg Ethanol und 100 mg α-Pinen. Alle Lockstoffkombinationen waren auf ein Zellstoffvlies von ca. 24 cm² und einigen Millimeter Stärke aufgebracht. Das Vlies wurde dann in einen Beutel aus Hochdruckpolyethylen (Stärke 50 μm, Oberfläche 112 cm²) eingesiegelt.

| Lockstoffkombination | Zahl der gefangenen Käfer % relativ |
|---|---|
| Standard | 100 |
| 200 mg Lineatin<br>2 000 mg Methylbutenol | 144 |
| 2 mg Lineatin<br>2 000 mg Methylbutenol<br>100 mg α-Pinen | 210 |
| 0,5 mg Lineatin<br>5 mg Amitinol<br>2 000 mg Methylbutenol<br>100 mg α-Pinen | 293 |

3

**0 071 814**

## Ansprüche

1. Verwendung von Lineatin in Kombination mit Methylbutenol und/oder Amitinol und/oder Ipsdienol und gegebenenfalls α-Pinen und/oder Ethanol zur Anlockung des gestreiften Nutzholzborkenkäfers (Trypodendron lineatum).

2. Mittel zur Anlockung des gestreiften Nutzholzborkenkäfers, dadurch gekennzeichnet, daß es als Lockstoff eine Kombination aus Lineatin, Methylbutenol und/oder Amitinol und/oder Ipsdienol und gegebenenfalls α-Pinen und/oder Ethanol enthält.

3. Mittel nach Anspruch 2, dadurch gekennzeichnet, daß das Gewichtsverhältnis Lineatin/Amitinol bzw. Lineatin/Ipsdienol 1 : 1 bis 1 : 20 ist.

4. Mittel nach Anspruch 1 oder 2, dadurch gekennzeichnet, daß das Gewichtsverhältnis Lineatin Methylbutenol 1 : 200 bis 1 : 5 000 ist.

5. Mittel nach Anspruch 1 bis 3, dadurch gekennzeichnet, daß es bis zu 20 Gewichtsprozent des Gesamtgewichts α-Pinen aufweist.

6. Verfahren zur Anlockung des gestreiften Nutzholzborkenkäfers, dadurch gekennzeichnet, daß als Lockstoff eine Kombination aus Lineatin, Methylbutenol und/oder Amitinol und/oder Ipsdienol und gegebenenfalls α-Pinen und/oder Ethanol dient.

## Claims

1. Use of lineatin in combination with methyl butenol and/or amitinol and/or ipsdienol and optionally α-pinene and/or ethanol for enticing the striped timber bark beetle (Trypodendron lineatum).

2. Agent for enticing the striped timber bark beetle, characterised in that it contains as an enticing substance a combination of lineatin, methyl butenol and/or amitinol and/or ipsdienol and optionally α-pinene and/or ethanol.

3. Agent according to Claim 2, characterised in that the weight ratio of lineating/amitinol or lineatin/ipsdienol is 1 : 1 to 1 : 20.

4. Agent according to Claim 1 or 2, characterised in that the weight ratio of lineatin/methyl butenol is 1 : 200 to 1 : 5,000.

5. Agent according to Claims 1 to 3, characterised in that it has up to 20 % by weight of the total weight of α-pinene.

6. Process for enticing the striped timber bark beetle, characterised in that a combination of lineatin, methyl butenol and/or amitinol and/or ipsdienol and optionally α-pinene and/or ethanol serves as an enticing substance.

## Revendications

1. Utilisation de la linéatine en combinaison avec le méthylbuténol et/ou l'amitinol et/ou l'ipsdiénol et éventuellement l'α-pinène et/ou l'éthanol pour appâter le bostryche strié de bois d'œuvre (Trypodendron lineatum).

2. Agent pour appâter le bostryche strié de bois d'œuvre, caractérisé en ce qu'il contient en tant qu'appât une combinaison de linéatine, méthylbuténol et/ou amitinol et/ou ipsdiénol et éventuellement α-pinène et/ou éthanol.

3. Agent selon la revendication 2, caractérisé en ce que le rapport en poids linéatine/amitinol ou linéatine/ipsdiénol est de 1 : 1 à 1 : 20.

4. Agent selon la revendication 1 ou 2, caractérisé en ce que le rapport en poids linéatine/méthylbuténol est de 1 : 200 à 1 : 5 000.

5. Agent selon la revendication 1 à 3, caractérisé en ce qu'il présente jusqu'à 20 % en poids du poids total en α-pinène.

6. Procédé pour appâter le bostryche strié de bois d'œuvre, caractérisé en ce que, comme appât, sert une combinaison de linéatine, méthylbuténol et/ou amitinol et/ou ipsdiénol et éventuellement α-pinène et/ou éthanol.

4